# EUROPÄISCHE PATENTSCHRIFT

(11) **EP 0 512 197 B1**
(45) Veröffentlichungstag und Bekanntmachung des Hinweises auf die Patenterteilung: **22.11.1995**
(21) Anmeldenummer: 92101923.8
(22) Anmeldetag: 05.02.1992
(51) Int. Cl.: B29C 47/04, B29B 9/06

(54) **Verfahren zur kontinuierlichen Herstellung eines richtungsfrei gemusterten, elastomeren Fussbodenbelags**
Process for the continuous manufacture of a randomly patterned, elastomeric floor covering
Procédé de fabrication en continu d'un revêtement de sol en élastomère à motifs aléatoires

(30) Priorität: 04.05.1991 DE 4114575
(43) Veröffentlichungstag der Anmeldung: 11.11.1992
(73) Patentinhaber: Firma Carl Freudenberg, 69469 Weinheim (DE)
(72) Erfinder: Feyerabend, Ulrich, W-6940 Weinheim (DE); Nahe, Torsten, W-6800 Mannheim (DE); Grünhag, Helmut, W-6944 Hemsbach (DE); Gröschel, Gerfried, W-6948 Waldmichelbach (DE); Graab, Gerhard, Dr., W-6800 Mannheim (DE)

(56) Entgegenhaltungen:
- EP-A- 0 226 946
- DE-A- 3 334 269
- DE-C- 4 027 268
- GB-A- 617 266

## Beschreibung

Die Erfindung betrifft ein Verfahren zur kontinuierlichen Herstellung eines richtungsfrei gemusterten Fußbodenbelags gemäß dem Oberbegriff des ersten Patentanspruchs.

Solche Fußbodenbeläge bestehen insbesondere aus thermoplastischen Werkstoffen oder aus vulkanisiertem Kautschuk, wobei die Sichtseite, ohne Erhebungen aufzuweisen, verschiedenfarbige Marmorierungen aufweist. Diese werden gebildet durch eingelagerte Formstücke, die als Schnitzel, Abschnitte, Stücke oder Chips vorliegen.

DE-PS 35 46 184 schlägt ein Verfahren zur kontinuierlichen Herstellung solcher richtungsfrei gemusterter Fußboden- und Wandbeläge aus insbesondere thermoplastischen Kunststoffen vor, bei dem man Formstücke des Kunststoffmaterials auf ein Transportband kontinuierlich zu einer Schicht mit weitgehend konstanter Schichthöhe aufschüttet,
die Formstückschicht vorwärmt bzw. vorsintert,
die vorgewärmte bzw. vorgesinterte Formstückschicht unter Wärme- und Druckeinwirkung zu einer homogenen Bahn verdichtet und die verdichtete, homogene Bahn unter Druckeinwirkung abkühlt. Mit diesem Verfahren werden auch bei höheren Fertigungsgeschwindigkeiten Lunker vermieden und dabei, auch bei großer Stückelung der Formstücke, ein scharf abgegrenztes Design erzielt. Die Struktur erscheint in allen Richtungen gleichmäßig, so daß die Produktionsrichtung auf dem Oberflächenbild nicht mehr erkennbar ist. Erreicht werden diese Vorzüge speziell dadurch, daß während des Verdichtungsvorganges sowie während der Abkühlung ständig ein jeweils weitgehend gleichmäßiger und konstanter Druck von wenigstens ca. 1,5 bis 2 bar auf die Bahn ausgeübt wird und daß anschließend von der abgekühlten Bahn eine oberflächennahe Schicht entfernt wird. Die Formstücke, die eingesetzt werden, sind vorzugsweise in sich gemustert.

Dieses Verfahren ist mit vulkanisierbaren Kautschuk-Werkstoffen nicht durchführbar, da während des Zusammenpressens der über- und nebeneinander geschichteten Formstücke beim Vulkanisiervorgang stets Lufteinschlüsse auftreten, ein Effekt, der vermutlich auf den Temperaturgradienten von z.B. der beheizten Walzenoberfläche bis hin zu den Innenbereichen der Formstück-Schüttung zurückzuführen ist. Ferner wurden Wulstbildungen und Farbvermischungen an den fertigen Bahnen beobachtet.

Die vorliegende Erfindung hat zur Aufgabe, ein gattungsgemäßes Verfahren derart weiterzuentwickeln, daß eine richtungsfreie Musterung der fertigen Fußbodenbelags-Oberfläche und völlige Freiheit von Lufteinschlüssen in der Materialbahn auch dann erzielt werden, wenn elastomere Werkstoffe, also Gummi bzw. vulkanisierbarer Kautschuk, verarbeitet werden sollen. Dabei soll auf den Verfahrensschritt des Abnehmens einer oberflächennahen Schicht verzichtet werden können.

Die Lösung dieser Aufgabe besteht in einem Verfahren mit den kennzeichnenden Merkmalen des Patentanspruchs. Ein herkömmlicher Schnecken-Kurzextruder (Längen-/Durchmesser-Verhältnis 6:1), wie er zum Beispiel in DE-OS 27 14 509 beschrieben ist, wird bei einer Arbeitstemperatur von 60 bis 100°C mit zwei oder mehreren verschiedenfarbigen Streifen aus vulkanisierbarem Gummi beschickt. Der Extruder wirkt ausschließlich fördernd: Die Ausstoßmenge beträgt 400 bis 600 kg/h. Es ist wesentlich, daß unter diesen Bedingungen keine farbliche Durchmischung in den Strängen erfolgt.

Die mehrfarbige Masse wird durch eine mit 200 bis 600 zylindrischen Bohrungen versehene Lochscheibe am austragsseitigen Ende des Extruders gedrückt. Die Bohrungen haben jeweils Durchmesser von 2 bis 10 mm, damit auch an dieser Stelle keine Farbdurchmischung durch Druckerhöhung erfolgen kann. 3 bis 5 mm Durchmesser wurden diesbezüglich als besonders zweckmäßig gefunden.

Die aus den Düsen heraustretenden Stränge werden abgeschlagen derart, daß marmorierte, mit Achatmustern versehene Formstücke entstehen, deren Länge erheblich kleiner als ihr Durchmesser ist: Bevorzugte Längen der Formstücke sind 1 bis 2 mm bei 4 mm Durchmesser; d.h., alle 1 bis 2 mm werden die austretenden Stränge abgeschlagen.

Die abgeschlagenen Abschnitte, Stücke oder Chips fallen direkt in den Spalt eines herkömmlichen Zweiwalzenkalanders mit beheizbaren und kühlbaren, horizontal angeordneten Walzen. Da die Zufuhr der Formstücke durch die Austragsmenge des Schnecken-Kurzextruders definiert geregelt ist, gelangt nur so viel Masse in den Einzugspalt des Kalanders, wie notwendig ist, um ein homogenes, fehlerfreies Band abzuziehen, das weder Wulstbildungen noch Lunker noch Farbvermischungen aufweist.

Ebenfalls zur Erreichung dieser Eigenschaften beträgt die Spaltbreite zwischen 1,5 und 2,5 mm, d.h. es wirkt auf die Formstücke ein konstanter Liniendruck ein. Ferner muß zu diesem Zweck die Temperierung der Walzen durch Kühl- und Heizvorrichtungen so ausgelegt sein, daß die Masse sich durch Reibung nicht nennenswert aufheizt und ihre Temperatur im Kalander stets um 60°C beträgt: Vorteilhafte Oberflächentemperaturen der Walzen liegen deshalb im Bereich von 80 bis 100°C.

Um die Drucklinie im Walzenspalt möglichst schmal zu halten, wird für das erfindungsgemäße Verfahren ein besonders niedriges Durchmesser- /Längen-Verhältnis von 1:3,5 bevorzugt. Beispielsweise beträgt die Walzenlänge 1,25 m, der Durchmesser 450 mm.

Die den Kalander verlassende Materialbahn wird direkt einer kontinuierlich arbeitenden, herkömmlichen Vulkanisationsanlage zugeführt, worin die Vulkanisation des Gummis bei üblichen Temperaturen von 160 bis 180°C erfolgt.

Der Fußbodenbelag verläßt als fertiges Produkt die Vulkanisationsstation; ein Nachbehandeln der Oberflächen ist nicht notwendig.

Der fertige Fußbodenbelag zeigt eine in allen Richtungen gleichmäßige, die Produktionsrichtung nicht mehr erkennen lassende Struktur auf seiner Oberfläche. Diese ist absolut ebenmäßig, glatt und weist keine Wülste, Lunker oder Farbvermischungen auf.

## Patentansprüche

1. Verfahren zur kontinuierlichen Herstellung eines richtungsfrei gemusterten Fußbodenbelags aus vulkanisierbarem, elastomerem Material, wobei mehrfarbige Formstücke erzeugt und miteinander unter Wärme- und Druckeinwirkung zu einer homogenen Bahn verdichtet werden, dadurch gekennzeichnet, daß man einen Schnecken- Kurzextruder mit einem Längen-/Durchmesser-Verhältnis von 4:1 bis 10:1 bei einer Arbeitstemperatur von 60 - 100°C kontinuierlich mit zwei oder mehreren verschiedenfarbigen Streifen aus vulkanisierbarem Elastomermaterial beschickt, wobei man die Fördergeschwindigkeit des Extruders auf eine Ausstoßmenge von 400 bis 600 kg/h eingestellt hat,
daß dabei keine farbliche Durchmischung in den Strängen durch den Extruder erfolgt,
daß man das Elastomermaterial austragsseitig eine Lochscheibe passieren läßt, welche 200 bis 600 zylindrische Bohrungen mit Durchmessern von jeweils 2 bis 10 mm aufweist,
daß man die aus der Lochscheibe austretenden Stränge im Abstand von jeweils 1 bis 2 mm zu Formstücken abschlägt, daß man die abgeschlagenen Formstücke direkt in den Spalt eines Zweiwalzenkalanders fallen läßt, dessen Walzen ein Durchmesser-/Längen-Verhältnis von 1:3,5 aufweisen und welche man auf eine Oberflächentemperatur von 60 bis 100 °C beheizt, und daß man die den Kalander verlassende, verdichtete Materialbahn direkt einer kontinuierlich arbeitenden, an sich bekannten Vulkanisationsanlage zuführt, worin man bei 160 bis 180°C die Endvulkanisation zur fertigen Belagsbahn durchführt.

## Claims

1. A process for the continuous manufacture of a randomly patterned floor covering from vulcanizable, elastomeric material, multicolored moulded pieces being produced and compressed with one another under the effect of heat and pressure to form a homogeneous web, characterized in that a short-screw extruder with a length/diameter ratio of 4:1 to 10:1 is continuously charged at an operating temperature of 60 - 100°C with two or more differently coloured strips of vulcanizable elastomeric material, the throughput rate of the extruder having been set to an output of 400 to 600 kg/h, in that there does not thereby result any mixing of the colours in the strands through the extruder, in that the elastomeric material is allowed to pass on the discharge side a breaker plate which has 200 to 600 cylindrical bores with diameters of in each case 2 to 10 mm, in that the strands emerging from the breaker plate are chopped off at intervals of in each case 1 to 2 mm to give moulded pieces, in that the chopped-off moulded pieces are allowed to fall directly into the nip of a two-roll calender, the rolls of which have a diameter/length ratio of 1:3.5 and are heated to a surface temperature of 60 to 100°C, and in that the compressed material web leaving the calender is fed directly to a continuously operating vulcanization installation known per se, in which the final vulcanization to form the finished covering web is carried out at 160 to 180°C.

## Revendications

1. Procédé de fabrication en continu d'un revêtement de sol en élastomère vulcanisable à motifs aléatoires, selon lequel des pièces moulées multicolores sont générées et comprimées les unes aux autres sous l'effet de chaleur et de pression pour se transformer en une bande homogène, caractérisé en ce que l'on alimente en continu une extrudeuse à vis, de course réduite, d'un rapport longueur/diamètre compris entre 4:1 et 10:1, à une température de travail de 60 à 100°C, de deux ou plusieurs bandes en élastomère vulcanisable de différentes couleurs, la vitesse de débit de l'extrudeuse étant réglée sur une quantité de débit de 400 à 600 kg/h,
en ce qu'un mélange des couleurs au sein des boudins n'est pas provoqué par l'extrudeuse,
en ce que l'élastomère est acheminé côté sortie à travers un disque doté de 200 à 600 perforations cylindriques d'un diamètre respectif de 2 à 10 mm,
en ce que les boudins sortant du disque perforé sont coupés à intervalles de respectivement 1 à 2 mm en vue d'obtenir des pièces moulées,
en ce que les pièces moulées coupées tombent directement dans l'écartement d'une calandre à deux cylindres, ces derniers présentant un rapport diamètre/longueur de 1:3,5 et étant chauffés à une température superficielle de 60 à 100°C, et
en ce que la bande de matériau comprimée sortant de la calandre est acheminée vers une installation de vulcanisation connue en soi, opérant en continu, au sein de laquelle la vulcanisation finale est réalisée à une température comprise entre 160 et 180°C en vue d'obtenir la bande de revêtement finie.
